# EUROPEAN PATENT APPLICATION

(11) **EP 3 537 369 A1**
(43) Date of publication of application: **11.09.2019**
(21) Application number: 19153921.2
(22) Date of filing: 28.01.2019
(51) Int. Cl.: G06Q 30/06, G06Q 10/00

(54) **METHOD AND SYSTEM FOR BATTERY RENTAL**

(30) Priority: 08.03.2018 TW 10707873
(71) Applicant: Kwang Yang Motor Co., Ltd., Kaohsiung City 80794 (TW)
(72) Inventor: LIN, Chen-Sheng, 80794 Kaohsiung (TW); CHANG, Sen-Hsien, 80794 Kaohsiung (TW); CHUANG, Po-Yu, 11501 Taipei City (TW); LIN, Jen-Chiun, 11501 Taipei City (TW); CHEN, Yuh-Rey, 11501 Taipei City (TW); LIU, Te-Chuan, 11501 Taipei City (TW)
(74) Representative: Mewburn Ellis LLP

(57) **Abstract**

A method for battery rental is proposed to include steps of: acquiring a contract identifier that indicates a type of a rental contract for a battery device (12) to be used in a vehicle (15), and transmitting the contract identifier to the battery device (12) for storage therein; transmitting a vehicle identifier corresponding to the vehicle (15) to the battery device (12) for storage therein; and transmitting the contract identifier and the vehicle identifier to a cloud server (13) for storage therein.

## Description

The disclosure relates to a rental method and a rental system, and more particularly to a battery rental method and a battery rental system.

In general, an electric vehicle uses a battery device as a power source thereof, and the battery device is usually removably mounted to the electric vehicle so as to be replaceable when the battery device is running out of power or is out of order. A user of the electric vehicle may make a battery rental contract with a dealer of the electric vehicle in order to rent a battery for the electric vehicle from the dealer. During a validity period of the contract, the user may charge the battery device at a charging station of the dealer. However, when multiple battery devices that belong to different users but have the same appearance are being charged at the same time at the charging station, the users may take one battery device, mistaken it for another. In addition, the battery devices having the same appearance may also be difficult for the dealer to manage.

Therefore, an object of the disclosure is to provide a method for battery rental that can alleviate at least one of the drawbacks of the prior art.

According to the disclosure, the method includes: by a service end electronic device of a service end which provides a battery rental service, acquiring a contract identifier that indicates a type of a rental contract for a battery device, and transmitting the contract identifier to the battery device for storage of the contract identifier in the battery device, wherein the service end electronic device is communicatively coupled to a cloud server via a communication network, and the battery device is to be rented out by the service end and for use in a vehicle; by the service end electronic device, transmitting a vehicle identifier that corresponds to the vehicle and a battery identifier that corresponds to the battery device to the battery device for storage of the vehicle identifier and the battery identifier in the battery device; by the service end electronic device, transmitting the vehicle identifier, the battery identifier and the contract identifier to the cloud server; and by the cloud server, storing the vehicle identifier, the battery identifier and the contract identifier therein, and annotating a relationship among the vehicle identifier, the battery identifier and the contract identifier after receipt of the vehicle identifier, the battery identifier and the contract identifier.

Another object of the disclosure is to provide a system for battery rental that can alleviate at least one of the drawbacks of the prior art.

According to the disclosure, the system includes a vehicle, a cloud server, a battery device that is put out for rental by a service end and that is capable of being removably installed on the vehicle for providing electric power to the vehicle, and a service end electronic device of the service end that is communicatively coupled to the cloud server via a communication network. The service end electronic device is configured to (i) acquire a contract identifier that indicates a type of a rental contract for the battery device; (ii) acquire, from the vehicle, a vehicle identifier that corresponds to the vehicle, (iii) acquire, from the battery device, a battery identifier that corresponds to the battery device, (iv) transmit the contract identifier, the vehicle identifier and the battery identifier to the battery device for storage of the contract identifier, the vehicle identifier and the battery identifier in the battery device, and (v) transmit the contract identifier, the vehicle identifier and the battery identifier to the cloud server over the communication network. The cloud server is configured to annotate, upon receipt of the contract identifier, the vehicle identifier and the battery identifier, a relationship among the contract identifier, the vehicle identifier and the battery identifier, and store the contract identifier, the vehicle identifier and the battery identifier.

Other features and advantages of the disclosure will become apparent in the following detailed description of the embodiment (s) with reference to the accompanying drawings, of which:
FIG. 1 is a block diagram illustrating an embodiment of the system for battery rental according to the disclosure;
FIG. 2 is a flow chart illustrating steps of an embodiment of the method for battery rental according to the disclosure; and
FIG. 3 is a flow chart illustrating steps of tying a battery device to a vehicle for the embodiment of the method for battery rental.

Before the disclosure is described in greater detail, it should be noted that where considered appropriate, reference numerals or terminal portions of reference numerals have been repeated among the figures to indicate corresponding or analogous elements, which may optionally have similar characteristics.

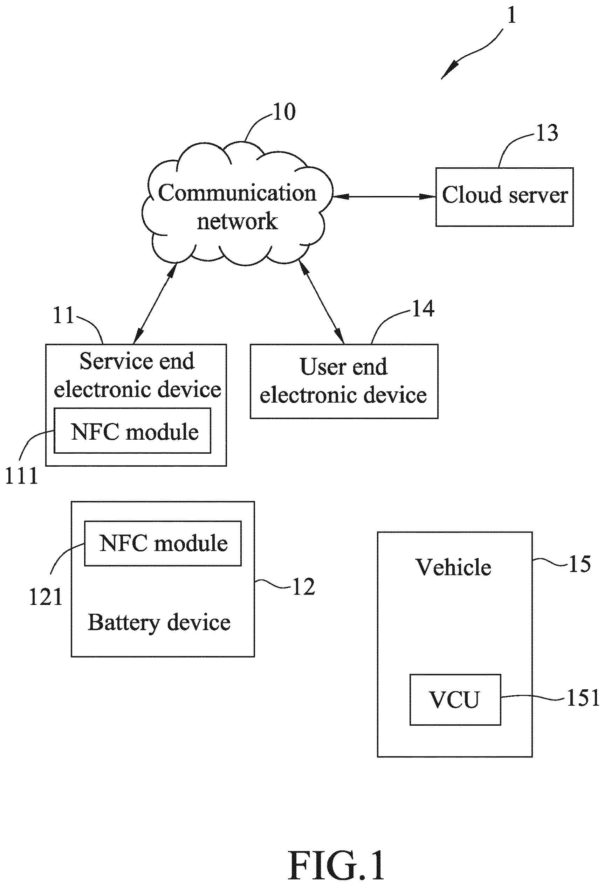

Referring to FIG. 1, the embodiment of the system 1 for battery rental according to this disclosure is shown to include a service end electronic device 11 of a service end, a battery device 12 to be rented out by the service end, a cloud server 13 that is communicatively coupled to the service end electronic device 11 over a communication network 10 (e.g., the Internet), a user end electronic device 14 that is communicatively coupled to the cloud server 13 over the communication network 10, and a vehicle 15 that corresponds to a user (e.g., used by the user, owned by the user, etc.) who holds the user end electronic device 14. In an embodiment, the service end electronic device 11 is a mobile device, such as an NFC-enabled smartphone or an NFC-enabled tablet computer of an electric vehicle vendor. The user end electronic device 14 may be a mobile device held by the user, such as an NFC-enabled smart phone.

In this embodiment, the service end electronic device 11 includes a near field communication (NFC) module 111, and the battery device 12 includes an NFC module 121, so that the NFC module 111 communicates with the NFC module 121 using an NFC protocol, enabling data transfer between the service end electronic device 11 and the battery device 12. The battery device 12 is a removable battery device which is rented by the user corresponding to the vehicle 15 from the service end (e.g., a dealer of the vehicle 15), and is capable of being removably installed on the vehicle 15 for providing electric power to the vehicle 15. Furthermore, the battery device 12 includes storage medium (e.g., flash memory, not shown) for storage of data therein. The vehicle 15 may be a pure electric vehicle or a hybrid electric vehicle, which is made in a form of a motorcycle, a car, a bus, etc. In this embodiment, the vehicle 15 is exemplified as an electric motorcycle, but this disclosure is not limited in this respect.

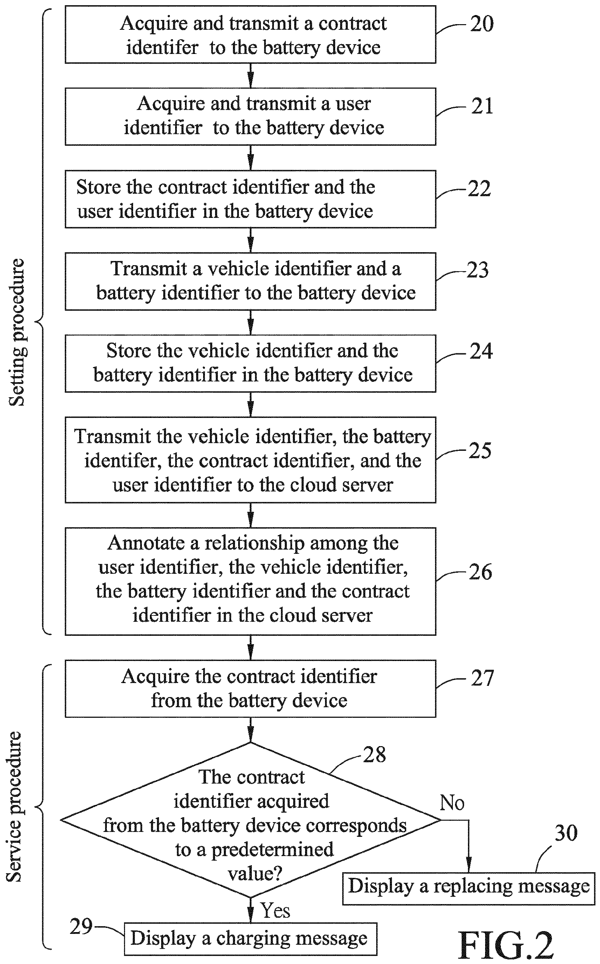

Further referring to FIG. 2 which illustrates steps of an embodiment of a method for battery rental, the system 1 is used to implement the method which is adapted for multiple different types of battery rental contracts available for the user to rent the battery device 12 from the service end, so as to tie the battery device 12 rented by the user to the vehicle 15, causing the battery device 12 to be limited for use by or electric power provision to the vehicle 15 only.

In step 20, the service end electronic device 11 acquires a contract identifier that indicates a type of a rental contract for the battery device 12, and transmits the contract identifier to the battery device 12 using the NFC protocol for storage of the contract identifier in the battery device 12.

The service end may provide multiple different types of rental contract (hereinafter also referred to as "contract type") for selection by the user. For example, the different contract types may include a long-term rental contract and a short-term rental contract, but this disclosure is not limited in this respect. In practice, the service end electronic device 11 may acquire the contract identifier from a contract barcode that corresponds to the long-term rental contract (or the short-term rental contract) when the contract type selected by the user is the long-term rental contract (or the short-term rental contract), but this disclosure is not limited to such implementation.

In step 21, the service end electronic device 11 acquires a user identifier from a user barcode that is displayed on the user end electronic device 14, and transmits the user identifier to the battery device 12 using the NFC protocol for storage of the user identifier in the battery device 12.

In practice, the user may use the user end electronic device 14 to install an application program (APP) that is downloaded from the cloud server 13, and go to a registration webpage provided by the APP for proceeding with registration and authentication of personal data to acquire the user identifier. The personal data may include information relating to a vehicle license of the vehicle 15, a driver's license, a name, an address, a phone number, etc.

In step 22, upon receipt of the contract identifier and the user identifier, the battery device 12 stores the contract identifier and the user identifier received thereby into the storage medium.

In step 23, the service end electronic device 11 transmits, to the battery device 12, a vehicle identifier that corresponds to the vehicle 15 and a battery identifier that corresponds to the battery device 12 for storage of the vehicle identifier and the battery identifier in the battery device 12.

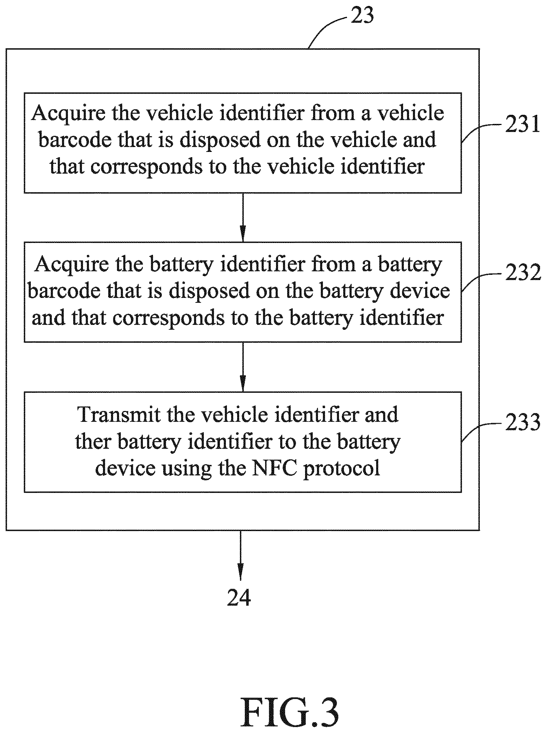

Referring to FIG. 3, step 23 includes sub-steps 231-233 in this embodiment.

In sub-step 231, the service end electronic device 11 acquires the vehicle identifier from a vehicle barcode that is disposed on the vehicle 15 and that corresponds to the vehicle identifier.

In practice, the manufacturer of the vehicle 15 may attach a sticker printed with the vehicle barcode to a bottom of a seat or an inner side of a trunk/storage compartment of the vehicle 15 before delivery of the vehicle 15 to the service end (e.g., a dealer) for sale, so that the dealer may use the service end electronic device 11 to acquire the vehicle identifier from the vehicle barcode which is attached and corresponds to the vehicle 15. However, this disclosure is not limited to such implementation.

In sub-step 232, the service end electronic device 11 acquires the battery identifier from a battery barcode that is disposed on the battery device 12 and that corresponds to the battery identifier.

In practice, the manufacturer of the battery device 12 may attach a sticker printed with the battery barcode to the battery device 12 before delivery of the battery device 12 to the service end (e.g., a dealer) for sale or rent, so that the dealer may use the service end electronic device 11 to acquire the battery identifier from the battery barcode which is attached and corresponds to the battery device 12. However, this disclosure is not limited to such implementation.

It is noted that each of the contract barcode, the user barcode, the vehicle barcode and the battery barcode may be a one-dimensional barcode or a two-dimensional barcode (e.g., a quick response code, QR code), but this disclosure is not limited in this respect.

In sub-step 233, the service end electronic device 11 transmits the vehicle identifier and the battery identifier to the battery device 12 using the NFC protocol.

In step 24, upon receipt of the vehicle identifier and the battery identifier, the battery device 12 stores the vehicle identifier and the battery identifier received thereby into the storage medium.

Through execution of steps 20-24, the battery device 12 is tied to the vehicle 15. In practice, every time the battery device 12 is installed to the vehicle 15, a vehicle control unit (VCU) 151 will determine whether the vehicle identifier stored therein (the manufacturer of the vehicle 15 would store the vehicle identifier which corresponds to the vehicle 15 and which corresponds to the vehicle barcode printed on the sticker attached to the vehicle 15 before delivery of the vehicle 15 to the service end) is the same as the vehicle identifier stored in the storage medium of the battery device 12. If the determination is affirmative, the VCU 151 triggers the battery device 12 to start provision of electric power to a battery component (not shown) that is fixed to the vehicle 15. If the determination is negative, the VCU 151 does not trigger the battery device 12 to provide electric power to the battery component that is fixed to the vehicle 15 (i.e., the battery device 12 does not supply electric power) .

In addition, any dealer may use its own service end electronic device to acquire vehicle identifier, the battery identifier, the contract identifier and the user identifier from the storage medium of the storage device 12, so as to know to which vehicle the battery device 12 corresponds based on the vehicle identifier, to which contract type the battery device 12 corresponds based on the contract identifier, and to which user the battery device 12 belongs based on the user identifier.

In step 25, the service end electronic device 11 transmits the vehicle identifier, the battery identifier, the contract identifier and the user identifier to the cloud server 13 over the communication network 10.

In step 26, upon receipt of the vehicle identifier, the battery identifier, the contract identifier and the user identifier, the cloud server 13 annotates a relationship among the user identifier, the vehicle identifier, the battery identifier and the contract identifier, and stores the user identifier, the vehicle identifier, the battery identifier and the contract identifier. In practice, the cloud server 13 may build a look-up table that records the relationship among the user identifier, the vehicle identifier, the battery identifier and the contract identifier.

It is known from steps 22, 24 and 26 that both of the cloud server 13 and the battery device 12 store the user identifier, the vehicle identifier, the battery identifier and the contract identifier, so any dealer may use its own service end electronic device to acquire the battery identifier from the battery device 12, and transmit the battery identifier thus acquired to the cloud server 13, so as to allow the cloud server 13 to find the user identifier, the vehicle identifier, and the contract identifier corresponding to the battery identifier by looking over the look-up table, and transmit the user identifier, the vehicle identifier, and the contract identifier thus found to the service end electronic device for use by the dealer. It is noted that this disclosure is not limited to such implementation. In other embodiments, it is possible that only one of the cloud server 13 and the battery device 12 stores the user identifier, the battery identifier, the vehicle identifier, and the contract identifier for query by the dealer.

The abovementioned steps 20-26 describe a setting procedure that is performed at the service end to set the contract type for the battery device 12 and to tie the battery device 12 to the vehicle 15 when the service end sells the vehicle 15 to the user and rents out the battery device 12 for use by the vehicle 15 to the user. The following steps 27-30 describe a service procedure that is performed at the service end when the user visits the service end for charging the battery device 12 or for replacing the battery device 12 with one that is sufficiently charged at the service end because the battery device 12 is running out of power.

In step 27, the service-end mobile device 11 uses the NFC module 111 to acquire the contract identifier from the battery device 12 using the NFC protocol, but in other embodiments, the service end electronic device 11 may acquire the contract identifier from the cloud server 13, and this disclosure is not limited in this respect.

In step 28, the service end electronic device 11 determines whether the contract identifier corresponds to a predetermined value. The flow goes to step 29 when the determination is affirmative, and goes to step 30 when otherwise.

In practice, the contract identifier may be a value of "1", representing that the type of the rental contract is the long-term rental contract, or a value of "0", representing that the type of the rental contract is the short-term rental contract, and the predetermined value may be set to, for example, "1", in this embodiment. When the contract identifier is the same as the predetermined value, i.e., the contract type of the battery device 12 is the long-term rental contract, the battery device 12 is rented out to the user for a predetermined long-term period (e.g., one year), and the battery device 12 is configured to be chargeable by the user at places other than the service end (e.g., at home). In addition, when the battery device 12 is out of order during the long-term rental period, the user may directly replace the battery device 12 with a new battery device with the dealer; and, when the user takes the battery device 12 to a charging station of the dealer for charging, the user may need to pay the dealer a charging fee. When the identifier is different from the predetermined value, i.e., the contract type of the battery device 12 is the short-term rental contract, the battery device 12 is rented out to the user for a predetermined short-term period (e.g., three days), and the battery device 12 is configured to be not chargeable at places other the service end. When the battery device 12 is running out of power during the short-term rental period, the user may exchange the battery device 12 for another battery device that is sufficiently charged and that is set for short-term rental at any site of the dealer (e.g., the service end).

In step 29, the service end electronic device 11 displays a charging message instructing one (e.g., the user or the dealer) to charge the battery device 12. With the battery device 12 corresponding to the long-term rental contract, the user may have to pay the dealer for charging the battery device 12.

In practice, when the battery device 12 is being charged at a charging station of the service end, the charging station may use a display to show a charging condition of the battery device 12 (e.g., residual electrical energy in the battery device 12, total electrical energy received from the charging station, etc.), so that the dealer can calculate the charging fee or determine whether the battery device 12 is out of order. If the battery device 12 is out of order, the dealer may take out a new battery device to replace the battery device 12 for the user, and transmit the vehicle identifier, the battery identifier, the contract identifier and the user identifier to the new battery device for storage of the same therein.

In step 30, the service end electronic device 11 displays a replacing message instructing one (e.g., the user or the dealer) to replace the battery device 12 with another battery device. Since the battery device 12 corresponds to the short-term rental contract, the dealer replaces the battery device 12 with another battery device which is for short-term rental, transmits the vehicle identifier, the battery identifier, the contract identifier and the user identifier to the another battery device for storage of the same therein, and deletes all the data stored in the original battery device 12.

Accordingly, the dealer may make profit in different ways respectively corresponding to the long-term rental contract type and the short-term rental contract type that respectively correspond to different values of the contract identifier. It is noted that step 21 may be omitted in some embodiments, that is, the user identifier is not required in such embodiments.

In summary, the embodiment of the method for battery rental according to this disclosure is suitable for multiple contract types, such as the long-term rental contract and the short-term rental contract, so that the user may have different options to select from to choose the most desired contract type. Furthermore, the multiple contract types may correspond to different ways of battery charging and fee collection, so that the dealer may have multiple ways of gaining profit. By virtue of tying the battery device 12 to the vehicle 15, the battery device 12 can supply electrical power only to the vehicle 15 of which the vehicle code corresponds to that stored in the battery device 12, so that the other user who takes the battery device 12 by mistake may become aware of the mistake when he or she finds that battery device 12 is unable to supply electrical power to his or her vehicle that does not correspond to the battery device 12. In addition, the dealer may acquire the vehicle identifier, the battery identifier, the contract identifier and the user identifier from the cloud server 13 and/or the battery device 12, favoring management of battery devices of the same type in battery rental.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A method for battery rental, **characterized by**:
a setting procedure that includes:
ST-1) by a service end electronic device (11) of a service end which provides a battery rental service, acquiring a contract identifier that indicates a type of a rental contract for a battery device (12), and transmitting the contract identifier to the battery device (12) for storage of the contract identifier in the battery device (12), wherein the service end electronic device (11) is communicatively coupled to a cloud server (13) via a communication network (10), and the battery device (12) is put out for rental by the service end and for use in a vehicle (15);
ST-2) by the service end electronic device (11), transmitting a vehicle identifier that corresponds to the vehicle (15) and a battery identifier that corresponds to the battery device (12) to the battery device (12) for storage of the vehicle identifier and the battery identifier in the battery device (12);
ST-3) by the service end electronic device (11), transmitting the vehicle identifier, the battery identifier and the contract identifier to the cloud server (13); and
ST-4) by the cloud server (13), storing the vehicle identifier, the battery identifier and the contract identifier therein, and annotating a relationship among the vehicle identifier, the battery identifier and the contract identifier after receipt of the vehicle identifier, the battery identifier and the contract identifier.

2. The method of claim 1, **characterized in that** said setting procedure further includes, between step ST-1) and step ST-2): by the service end electronic device (11), acquiring a user identifier from a user barcode that is displayed on a user end electronic device (14) of a user who corresponds to the vehicle (15), and transmitting the user identifier to the battery device (12) for storage of the user identifier in the battery device (12).

3. The method of Claim 1 or 2, further **characterized by**, after the setting procedure, a service procedure that includes:
SV-1) by the service end electronic device (11), acquiring the contract identifier from the battery device (12);
SV-2) by the service end electronic device (11), determining whether the contract identifier acquired in step SV-1) corresponds to a predetermined value;
SV-3) by the service end electronic device (11), displaying a charging message instructing one to charge the battery device (12) upon determining in step SV-2) that the contract identifier corresponds to the predetermined value; and
SV-4) by the service end electronic device (11), displaying a replacing message instructing one to replace the battery device (12) with another battery device (12) upon determining in step SV-2) that the contract identifier does not correspond to the predetermined value.

4. The method of Claim 2, **characterized in that** step ST-3) further includes: by the service end electronic device (11), transmitting the user identifier to the cloud server (13); and
wherein step ST-4) further includes: by the service end electronic device (11), storing the user identifier therein, and annotating a relationship among the user identifier, the vehicle identifier, the battery identifier and the contract identifier.

5. The method of any one of the preceding claims, **characterized in that** step ST-2) includes:
by the service end electronic device (11), acquiring the vehicle identifier from a vehicle barcode that is disposed on the vehicle (15) and that corresponds to the vehicle identifier;
by the service end electronic device (11), acquiring the battery identifier from a battery barcode that is disposed on the battery device (12) and that corresponds to the battery identifier; and
by the service end electronic device (11), transmitting the vehicle identifier and the battery identifier to the battery device (12) using a near file communication (NFC) protocol.

6. The method of any one of the preceding claims, **characterized in that**, in step ST-2), the service end electronic device (11) transmits the vehicle identifier and the battery identifier to the battery device (12) using a near field communication (NFC) protocol.

7. A system for battery rental, **characterized by**:
a vehicle (15);
a cloud server (13);
a battery device (12) that is put out for rental by a service end and that is capable of being removably installed on said vehicle (15) for providing electric power to said vehicle (15); and
a service end electronic device (11) of the service end that is communicatively coupled to said cloud server (13) via a communication network (10), and configured to
acquire a contract identifier that indicates a type of a rental contract for said battery device (12),
acquire, from said vehicle (15), a vehicle identifier that corresponds to said vehicle (15),
acquire, from said battery device (12), a battery identifier that corresponds to said battery device (12),
transmit the contract identifier, the vehicle identifier and the battery identifier to said battery device (12) for storage of the contract identifier, the vehicle identifier and the battery identifier in said battery device (12), and
transmit the contract identifier, the vehicle identifier and the battery identifier to said cloud server (13) over the communication network (10);
wherein said cloud server (13) is configured to annotate, upon receipt of the contract identifier, the vehicle identifier and the battery identifier, a relationship among the contract identifier, the vehicle identifier and the battery identifier, and store the contract identifier, the vehicle identifier and the battery identifier.

8. The system of Claim 7, further **characterized by** a user end electronic device (14) of a user who corresponds to said vehicle (15), said user end electronic device (14) being configured to display a user barcode corresponding to a user identifier;
wherein said service end electronic device (11) is further configured to acquire the user identifier from the user barcode displayed on said user end electronic device (14), transmit the user identifier to said battery device (12) for storage of the user identifier in said battery device (12), and transmit the user identifier to said cloud server (13); and
wherein said cloud server (13) is configured to store the user identifier, and to annotate a relationship among the user identifier, the contract identifier, the vehicle identifier and the battery identifier.

9. The system of Claim 7 or 8, **characterized in that** said service end electronic device (11) is further configured to acquire the contract identifier stored in said battery device (12), determine whether the contract identifier stored in said battery device (12) corresponds to a predetermined value, display a charging message instructing one to charge the battery device (12) upon determining that the contract identifier stored in said battery device (12) corresponds to the predetermined value, and display a replacing message instructing one to replace said battery device (12) with another battery device (12) upon determining that the contract identifier stored in said battery device (12) does not correspond to the predetermined value.

10. The system of any one of claims 7 to 9, **characterized in that** said vehicle (15) has a vehicle barcode that corresponds to the vehicle identifier disposed thereon, and said battery device (12) has a battery barcode that corresponds to the battery identifier disposed thereon; and
wherein said service end electronic device (11) is configured to acquire the vehicle identifier and the battery identifier from the vehicle barcode and the battery barcode, respectively.

11. The system of any one of Claim 7 to 10, **characterized in that** each of said service end electronic device (11) and said battery device (12) includes a near field communication (NFC) module (111, 121), said NFC module of said service end electronic device (11) is configured to communicate with said NFC module of said battery device (12) using an NFC protocol for transmitting the contract identifier, the vehicle identifier and the battery identifier to said battery device (12).
